(19) Europäisches Patentamt
European Patent Office
Office européen des brevets

(11) **EP 4 787 035 A1**

(12) **EUROPEAN PATENT APPLICATION**
published in accordance with Art. 153(4) EPC

(43) Date of publication:
**05.08.2026 Bulletin 2026/32**

(21) Application number: **24896492.6**

(22) Date of filing: **25.11.2024**

(51) International Patent Classification (IPC):
**G02B 6/38** (2006.01)     **G02B 6/44** (2006.01)

(52) Cooperative Patent Classification (CPC):
**G02B 6/38; G02B 6/44**

(86) International application number:
**PCT/CN2024/134373**

(87) International publication number:
**WO 2025/113403 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.11.2023 CN 202311603651**

(71) Applicant: **HUAWEI TECHNOLOGIES CO., LTD.
Shenzhen 518129 (CN)**

(72) Inventors:
- **TANG, Feng**
  **Shenzhen, Guangdong 518129 (CN)**
- **LI, Xiupeng**
  **Shenzhen, Guangdong 518129 (CN)**
- **QI, Biao**
  **Shenzhen, Guangdong 518129 (CN)**

(74) Representative: **Thun, Clemens
Mitscherlich PartmbB
Karlstraße 7
80333 München (DE)**

(54) **OPTICAL FIBER CONNECTOR AND CONNECTION BOX**

(57) Embodiments of this application relate to the field of communication technologies, and provide an optical fiber connector and a connection box. The optical fiber connector includes an inner housing assembly, a ferrule assembly, and an optical cable. The ferrule assembly includes a plurality of ceramic ferrules. One end of each of the ceramic ferrules is located in an accommodation cavity of the inner housing assembly, and the other end extends out of the inner housing assembly. The optical cable includes a plurality of optical fibers, the plurality of optical fibers penetrate through-holes of the ceramic ferrules, and the plurality of ceramic ferrules are arranged in an array including M rows and N columns, where M≥2, and N≥2. The ceramic ferrule has high stiffness and strength, which helps improve precision of the ferrule, allowing ceramic ferrules at two ends to be better aligned during interconnection between optical fiber connectors. This helps improve alignment precision of optical fibers in the ceramic ferrules, and effectively reduce a loss of transmission between optical fibers. Therefore, efficiency of optical signal transmission between the optical fiber connectors is efficiency improved, and a ferrule loss is reduced.

**FIG. 3**

## Description

This application claims priority to Chinese Patent Application No. 202311603651.5, filed on November 27, 2023 and entitled "OPTICAL FIBER CONNECTOR AND CONNECTION BOX", which is incorporated herein by reference in its entirety.

## TECHNICAL FIELD

This application relates to the field of communication technologies, and in particular, to an optical fiber connector and a connection box

## BACKGROUND

An optical distribution network (Optical Distribution Network, ODN) is an optical cable network that provides an optical transmission channel between an optical line terminal (Optical Line Terminal, OLT) and an optical network unit (Optical Network Unit, ONU). The optical distribution network may connect one optical line terminal device to a plurality of optical network unit devices, to provide bidirectional transmission for optical signals.

In optical distribution network projects, connection boxes (for example, optical cross-connection boxes, optical distribution boxes, or fiber access terminals) are typically used for interconnection between optical fibers, to implement network transmission. Specifically, an adapter is usually disposed on a connection box, and two ends of the adapter are respectively connected to two optical fiber connectors. Insertion of the two optical fiber connectors into the two ends of the adapter implements interconnection between two optical fibers. The optical fiber connector has a ferrule, inside which a through-hole is provided, and the optical fiber typically penetrates the through-hole of the ferrule. For the interconnection between two optical fiber connectors, ferrules in the two optical fiber connectors are interconnected, allowing optical fibers in the two optical fiber connectors to be interconnected. Currently, commonly used ferrules are made of a plastic material. The ferrule is provided with a plurality of through-holes disposed in parallel, and a plurality of optical fibers penetrate the through-holes.

However, in the optical fiber connector, the ferrule made of the plastic material has low strength and molding precision, resulting low alignment between through-holes during interconnection between two ferrules. As a result, efficiency of signal transmission between the ferrules is reduced, increasing a ferrule loss.

## SUMMARY

Embodiments of this application provide an optical fiber connector and a connection box, to effectively improve efficiency of optical signal transmission between optical fiber connectors, and reduce a ferrule loss.

A first aspect of this application provides an optical fiber connector, including an inner housing assembly, a ferrule assembly, and an optical cable.

The inner housing assembly has an accommodation cavity, the ferrule assembly includes a plurality of ceramic ferrules, one end of each of the ceramic ferrules is located in the accommodation cavity, and the other end of each of the ceramic ferrules extends out of the inner housing assembly.

Each of the ceramic ferrules has a through-hole, the optical cable includes a plurality of optical fibers, and the plurality of optical fibers penetrate through-holes of the ceramic ferrules.

The plurality of ceramic ferrules are arranged in an array including M rows and N columns, where $M \geq 2$, and $N \geq 2$.

In embodiments of this application, the plurality of ceramic ferrules arranged in an array are used, and the ceramic ferrules are designed to be located in the same inner housing assembly. The ceramic ferrule has high strength and stiffness, which helps improve precision of the ferrule, allowing ceramic ferrules at two ends to be better aligned during interconnection between optical fiber connectors. This helps improve alignment precision of optical fibers in the ceramic ferrules, and can effectively reduce a loss of transmission between optical fibers. Therefore, efficiency of optical signal transmission between the optical fiber connectors is efficiency improved, and a ferrule loss is reduced.

In a possible implementation, end faces of the ceramic ferrules are all inclined planes with a same inclination direction. This can effectively reduce or avoid reflected light in the optical fiber body, effectively avoid impact of excessive reflected light in the optical fiber body on normal optical signal transmission, and helps improve the optical signal transmission efficiency.

In a possible implementation, in a direction from a 1st row to an Mth row, the end faces of the ceramic ferrules are located in a same inclined plane; or in a direction from a 1st column to an Nth column, the end faces of the ceramic ferrules are located in a same inclined plane.

In a possible implementation, the end faces of the ceramic ferrules satisfy the following formula:

$$\mathrm{H} = D \tan \alpha$$

H is a height difference between centers of end faces of two adjacent ceramic ferrules in the inclination direction, D is a distance between center lines of the two adjacent ceramic ferrules in the inclination direction, and $\alpha$ is an inclination angle of the end faces of the ceramic ferrules. In this way, in the inclination direction, the end faces of the ceramic ferrules gradually rise in a ladder shape, and the end faces of the ceramic ferrules can be located in the same inclined plane. This facilitates grinding of the end faces of the ceramic ferrules, and effectively improves grinding efficiency. In addition, sizes of parts that are ground from the ceramic ferrules in the process of grinding the ceramic ferrules may be the same, so that there are fewer or no cases in which the sizes of the parts that are ground from the ceramic ferrules are different. This helps improve grinding evenness of the ceramic ferrules and improve grinding efficiency.

In a possible implementation, the inner housing assembly includes a front housing and a rear housing, and a front end of the rear housing is connected to a rear end of the front housing.

Each of the ceramic ferrules includes a connection portion and an insertion portion that are connected, the front housing has a first cavity, the connection portion is located in the first cavity, and the insertion portion extends out of a front end of the front housing. One end of the connection portion abuts against the front housing, and the other end of the connection portion abuts against the rear housing. This can effectively avoid detachment between the ceramic ferrule and the inner housing assembly, and helps improve reliability and stability of a connection between the ceramic ferrule and the inner housing assembly.

In a possible implementation, the first cavity of the front housing includes M sub-cavities, the M sub-cavities are sequentially arranged in the direction from the 1st row to the Mth row, and each of the sub-cavities has N ceramic ferrules.

Alternatively, the first cavity of the front housing includes N sub-cavities, the N sub-cavities are sequentially arranged in the direction from the 1st column to the Nth column, and each of the sub-cavities has M ceramic ferrule.

Each of the sub-cavities has a guiding pad, and the one end of the connection portion abuts against the guiding pad. The guiding pad may guide the ceramic ferrule in an axis direction of the ceramic ferrule, to determine a specific position of the ceramic ferrule in an axis direction of the inner housing assembly, so as to help improve precision of disposing the ceramic ferrule in the inner housing assembly. In addition, the guiding pad can further prevent the ceramic ferrule from moving in the axial direction. This helps improve reliability and stability of disposing the ceramic ferrule in the inner housing assembly.

In a possible implementation, in the direction from the 1st row to the Mth row, heights of end faces that are of the guiding pads and that face the ceramic ferrules are sequentially staggered in an axial direction, and a stagger distance between end faces of two adjacent guiding pads in the axial direction is H; or in the direction from the 1st column to the Nth column, heights of end faces that are of the guiding pads and that face the ceramic ferrules are sequentially staggered in an axial direction, and a stagger distance between end faces of two adjacent guiding pads in the axial direction is H.

H satisfies the following formula:

$$H = D \tan\alpha$$

D is the distance between the center lines of the two adjacent ceramic ferrules in the inclination direction, and $\alpha$ is the inclination angle of the end faces of the ceramic ferrules. In this way, when the ceramic ferrules abut against the end faces of the guiding pads, the end faces of the guiding pads may limit installation positions of the ceramic ferrules in the axial direction, so that the ceramic ferrules can be fastened in preset positions, and the ceramic ferrules can be arranged in a ladder shape. In a process of assembling the ceramic ferrule and the inner housing assembly, locating the ceramic ferrule in the axial direction does not need to be additionally considered, so that an installation process of the ceramic ferrule can be simplified, and assembly efficiency between the ceramic ferrule and the inner housing assembly is improved.

In a possible implementation, the inner housing assembly further includes spring parts, and the connection portion of each ceramic ferrule is sleeved with a spring part. One end of the spring part abuts against the ceramic ferrule, and the other end of the spring part abuts against the rear housing. A resilient force of the spring part may drive the ceramic ferrule to extrude toward another ceramic ferrule, to cause the two ceramic ferrules to be closely fitted to each other, and stability of interconnection between the two ceramic ferrules can be effectively improved. Therefore, the optical signal transmission efficiency is effectively improved.

In a possible implementation, the front housing is provided with a first clamping slot, and the rear housing has a first clamping portion cooperating with the first clamping slot. The first clamping portion is clamped in the first clamping slot, and the front housing and the rear housing are connected through cooperation between the first clamping portion and the first clamping slot. This can effectively avoid detachment between the front housing and the rear housing, and can improve reliability and firmness of a connection between the front housing and the rear housing. In addition, this further helps improve assembly efficiency between the front housing and the rear housing, and improve production efficiency of the optical fiber connector.

In a possible implementation, the inner housing assembly further includes a base connected to the rear housing, and the base is located at one end of the rear housing away from the front housing. The rear housing has a second cavity connected to the first cavity, and the base has a third cavity connected to the second cavity. The optical cable is located in the third cavity, and the optical fibers in the optical cable sequentially pass through the third cavity, the second cavity, and the first cavity, and penetrate the through-holes of the ceramic ferrules. The base may fasten the optical cable, so that the optical cable can be fastened in the inner housing assembly, to improve firmness and reliability of disposing the optical cable in the inner housing assembly.

In a possible implementation, the rear housing has a second clamping portion, the base is provided with a second clamping slot cooperating with the second clamping portion, and the second clamping portion is clamped in the second clamping slot. This can improve firmness and reliability of a connection between the front housing, the rear housing, and the base, can effectively avoid detachment between the base, the rear housing, and the front housing, and effectively improves overall structural stability of the inner housing assembly.

In a possible implementation, the front housing includes M front sub-housings disposed in parallel, the rear housing includes M rear sub-housings disposed in parallel, and the M front sub-housings are respectively connected to the M rear sub-housings. Each group of connected front sub-housings and rear sub-housings has N ceramic ferrules. In this way, the ceramic ferrules can be arranged in the manner of M rows and N columns.

Alternatively, the front housing includes N front sub-housings disposed in parallel, the rear housing includes N rear sub-housings disposed in parallel, the N front sub-housings are respectively connected to the N rear sub-housings. Each group of connected front sub-housings and rear sub-housings has M ceramic ferrules. In this way, the ceramic ferrules can still be arranged in the manner of M rows and N columns.

In a possible implementation, the base has a same quantity of second clamping slots as a quantity of rear sub-housings, and the second clamping portion on the rear sub-housing is respectively clamped in the second clamping slot. This can effectively avoid detachment between the sub-front housing, the rear sub-housing, and the base, and helps improve the structural stability of the inner housing assembly.

In a possible implementation, in the direction from the 1st row to the Mth row, distances from second clamping slots to an end face of the base gradually increase, and a distance difference between two adjacent second clamping slots in an axis direction of the base is H.

Alternatively, in the direction from the 1st column to the Nth column, distances from second clamping slots to an end face of the base gradually increase, and a distance difference between two adjacent second clamping slots in an axis direction of the base is H.

H satisfies the following formula:

$$H = D \tan \alpha$$

D is the distance between the center lines of the two adjacent ceramic ferrules in the inclination direction, and $\alpha$ is the inclination angle of the end faces of the ceramic ferrules. In this way, when the rear sub-housing is clamped in the second clamping slot via the second clamping portion, the second clamping slot may limit a position of the rear sub-housing, so that the rear sub-housing and the front sub-housing may be fastened in preset positions, and ceramic ferrules in the sub-front housing and the rear sub-housing may also be distributed in preset positions in a stepped shape. In a process of assembling the ceramic ferrule and the inner housing assembly, alignment of the ceramic ferrule in the axial direction does not need to be additionally considered, so that installation of the ceramic ferrule can be simplified, and efficiency of assembly between the ceramic ferrule and the inner housing assembly is improved.

In a possible implementation, the optical fiber connector further includes an outer housing assembly, where the outer housing assembly includes a first housing and a second housing.

The first housing is sleeved over the inner housing assembly, and the second housing is sleeved over an outer circumference of the first housing and rotatably connected to the first housing.

In a possible implementation, an outer circumference of the base has a shaft shoulder portion, the first housing has an elastic clamping portion, and the elastic clamping portion abuts against an end face of the shaft shoulder portion. Through cooperation between the shaft shoulder portion and the first clamping portion, limiting in the axial direction can be implemented, and moving between the first housing and the base in the axial direction can be reduced or avoided. This helps improve reliability and stability of a connection between the outer housing assembly and the inner housing assembly in the axial direction.

In a possible implementation, the outer circumference of the base is further provided with a groove, an inner wall of the first housing has a limiting protrusion cooperating with the groove, and the limiting protrusion is located in the groove. The groove may perform a circumferential limiting function on the limiting protrusion, to reduce or avoid rotation of the first housing relative to the base. This helps improve reliability and stability of a circumferential connection between the first housing and the base.

In a possible implementation, the outer housing assembly further includes a boot, and at least a part of the boot is sleeved over at least a part of the first housing and is threaded to the first housing. The boot may provide elastic protection for the optical cable. In a bending process of the optical cable, the boot may increase a bending radius of the optical cable, to avoid breaking of the optical cable due to an excessively small bending radius, so as to avoid impact of the breaking of the optical cable on signal transmission between optical fiber connectors.

In a possible implementation, the optical fiber connector further includes a first optical cable protective jacket, where the first optical cable protective jacket is sleeved over the optical cable, and one end of the first optical cable protective jacket is connected to the base. The first optical cable protective jacket may also protect the optical cable, to increase the bending radius of the optical cable, so as to avoid the breaking of the optical cable due to the excessively small bending radius. This helps prolong a service life of the optical cable.

In a possible implementation, the optical fiber connector further includes a second optical cable protective jacket, where the second optical cable protective jacket is sleeved over the optical cable, and the second optical cable protective jacket is located in the boot. The second optical cable protective jacket and the first optical cable protective jacket may provide protection for the optical cable at different positions, so that the second optical cable protective jacket and the first optical cable protective jacket can provide more comprehensive protection for the optical cable, to avoid the breaking of the optical cable.

A second aspect of this application provides a connection box, including a housing and an adapter. The adapter is located on the housing, and the adapter is configured to cooperate with any one of the foregoing optical fiber connectors. The adapter in the connection box cooperates with the foregoing optical fiber connector, so that an optical fiber connector inside the connection box and an optical fiber connector outside the connection box can be interconnected via the adapter, to implement optical signal transmission, so as to effectively improve stability and reliability of the signal transmission.

In a possible implementation, the adapter has a same quantity of guiding sleeves as a quantity of ceramic ferrules, and guiding sleeves are configured to be corresponding to arrangement of ceramic ferrules.

Each of the guiding sleeves has a guiding through-hole, and two ends of the guiding through-hole each are configured for insertion of the ceramic ferrule. In this way, connection coaxiality of the ceramic ferrules can be effectively improved, and interconnection precision of the ceramic ferrules is improved. Therefore, efficiency of signal transmission between optical fibers is effectively improved.

## BRIEF DESCRIPTION OF DRAWINGS

FIG. 1 is a diagram of a structure of an optical fiber connector according to an embodiment of this application;

FIG. 2 is an exploded view of an optical fiber connector according to an embodiment of this application;

FIG. 3 is a diagram of a structure of an optical fiber connector from which an outer housing assembly is removed according to an embodiment of this application;

FIG. 3A is an exploded view of an optical fiber connector from which an outer housing assembly is removed according to an embodiment of this application;

FIG. 4 is a sectional view of an optical fiber connector from which an outer housing assembly is removed according to an embodiment of this application;

FIG. 5 is a diagram of arrangement of ceramic ferrules according to an embodiment of this application;

FIG. 6 is a diagram of a structure of inclination of ceramic ferrules according to an embodiment of this application;

FIG. 7 is a diagram of a ceramic ferrule grinding process according to an embodiment of this application;

FIG. 8 is an enlarged view of an area A in FIG. 6;

FIG. 9 is a diagram of a connection between a front housing and a rear housing according to an embodiment of this application;

FIG. 10 is a diagram of a structure of a rear housing according to an embodiment of this application;

FIG. 11 is a diagram of a structure of a front housing according to an embodiment of this application;

FIG. 12 is a diagram of a structure of a connection between a front housing, a rear housing, and a base according to an embodiment of this application;

FIG. 13 is a sectional view of a front housing according to an embodiment of this application;

FIG. 14 is a diagram of a structure of another inner housing assembly according to an embodiment of this application;

FIG. 15 is a diagram of a structure of a rear sub-housing according to an embodiment of this application;

FIG. 16 is a main view of a base according to an embodiment of this application;

FIG. 17 is a sectional view of an optical fiber connector according to an embodiment of this application;

FIG. 18 is a diagram of a structure of a base according to an embodiment of this application;

FIG. 19 is a diagram of a structure of a first housing according to an embodiment of this application;

FIG. 20 is a sectional view of a first housing according to an embodiment of this application;

FIG. 21 is a diagram of a structure of a connection between a dust cap and an optical fiber connector according to an embodiment of this application;

FIG. 22 is a diagram of a structure of an application link of optical fiber connectors according to an embodiment of this application;

FIG. 23 is a diagram of an internal link of a first connection box according to an embodiment of this application; and

FIG. 24 is a diagram of an internal link of a fourth connection box according to an embodiment of this application.

Reference numerals:

100-Optical fiber connector; 110-Inner housing assembly; 111-Accommodation cavity;

112-Front housing; 1121-First cavity; 11211-Sub-cavity;

1122-Guiding pad; 1123-First clamping slot; 1124-Rear end;

1125-Front sub-housing; 113-Rear housing; 1131-First clamping portion;

1132-Second cavity; 1133-Second clamping portion; 1134-Rear sub-housing;

114-Spring part; 115-Base; 1151-Third cavity;

1152-Second clamping slot; 1153-Shaft shoulder portion; 1154-Groove;

120-Ferrule assembly; 121-Ceramic ferrule; 1211-Through-hole;

1212-Connection portion; 1213-Insertion portion; 130-Optical cable;

140-Outer housing assembly; 141-First housing; 1411-Elastic clamping portion;

1412-Limiting protrusion; 142-Second housing; 143-Boot;

150-First optical cable protective jacket; 160-Second optical cable protective jacket;

170-Dust cap.

## DESCRIPTION OF EMBODIMENTS

Terms used in embodiments of this application are only used to explain specific embodiments of this application, but are not intended to limit this application.

In optical distribution network projects, a device such as an optical cross-connection box, an optical distribution box, or a fiber access terminal typically cooperates with a connector on an optical fiber via an adapter on the device, to implement interconnection between the optical fiber and the connection box. The optical fiber connector has a ferrule inside which a through-hole is provided, and the optical fiber typically penetrates the through-hole of the ferrule. For the interconnection between two optical fiber connectors, ferrules in the two optical fiber connectors are interconnected, allowing optical fibers in the two optical fiber connectors to be interconnected. Currently, in conventional technologies, commonly used ferrules are made of a plastic material. The ferrule is provided with a plurality of through-holes disposed in parallel, and a plurality of optical fibers penetrate the through-holes.

However, the optical fiber connector has the following problems:

First, as the ferrule made of the plastic material has low molding precision, during interconnection between two ferrules, it is difficult to ensure that all through-holes can be completely aligned, resulting low alignment between the through-holes. As a result, efficiency of optical signal transmission between the ferrules is reduced, and a ferrule loss is increased

Second, it is difficult to remove dust on an end face of the ferrule with the plurality of fine through-hole structures. In practical use, once the end face of the ferrule is stained by dust or the like, optical signal transmission is significantly affected, and the loss exceeds a limit.

In addition, as a ferrule made of the plastic material has low strength, a guide pin structure on the ferrule is damage-prone in case of collision. Consequently, normal signal transmission is affected.

In another conventional technology, an optical fiber connector with ceramic ferrules is further provided. The optical fiber connector has two ceramic ferrules, and an inner housing assembly is disposed on an outer circumference of each ceramic ferrule, to fasten and protect the ceramic ferrule. However, in the optical fiber connector, because each of the ceramic ferrules is separately disposed in respective inner housing assembly, there is a large quantity of inner housing assemblies, occupying a large space. Consequently, a size of the optical fiber connector is increased, which is not favorable to a compact design of the optical fiber connector.

To resolve the problems, researchers work out a solution to improve the ferrule of the optical fiber connector. A plurality of ceramic ferrules arranged in an array are used, and the ceramic ferrules are enabled to be positioned in a same inner housing assembly. As the ceramic ferrule has high strength and stiffness, precision of the ferrule can be improved, allowing ceramic ferrules at two ends to be better aligned during interaction between optical fiber connectors. This helps improve alignment precision of optical fibers in the ceramic ferrules, and can effectively reduce a loss of transmission between optical fibers. Therefore, efficiency of optical signal transmission between the optical fiber connectors is effectively improved.

The following clearly describes technical solutions in embodiments of this application with reference to the accompanying drawings in embodiments of this application. It is clear that the described embodiments are some but not all of embodiments of this application. All other embodiments obtained by persons skilled in the art based on embodiments of this application without creative efforts shall fall within the protection scope of this application.

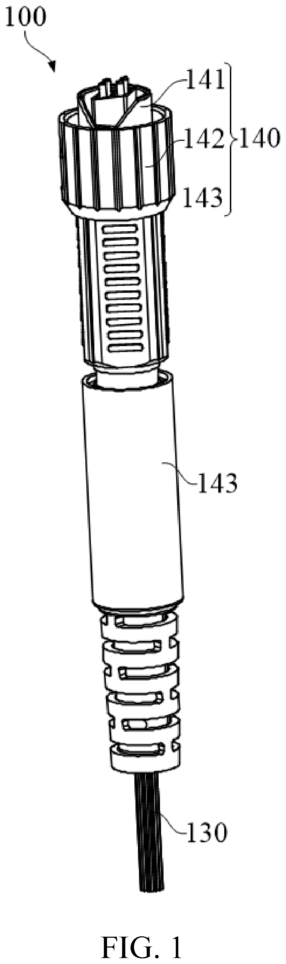

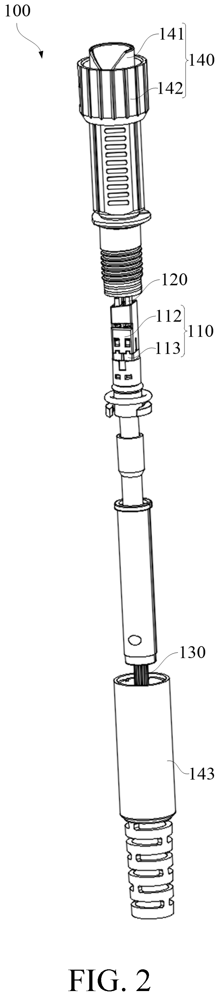

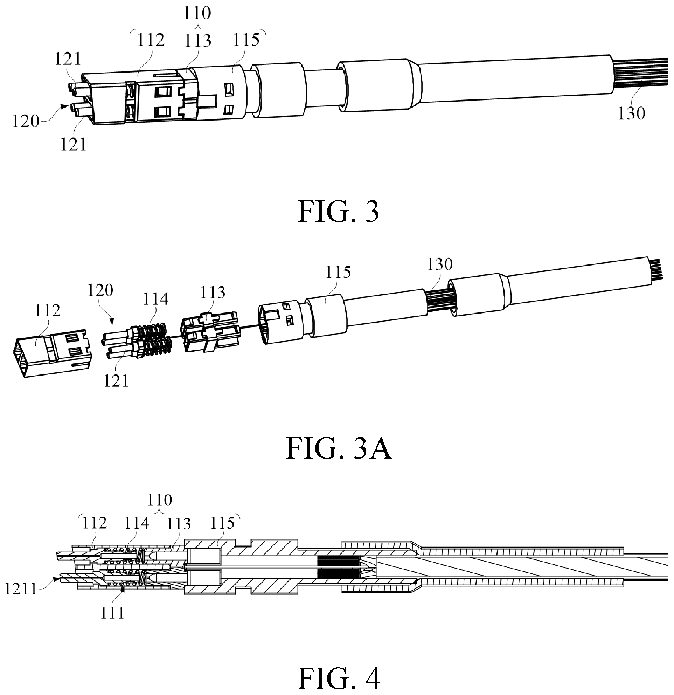

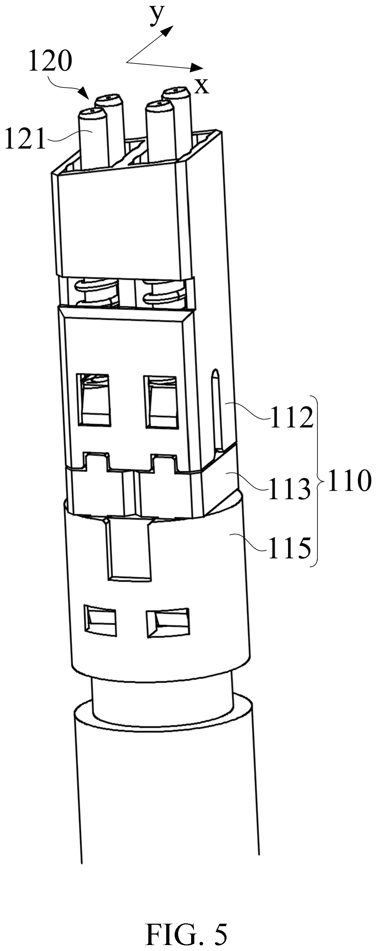

FIG. 1 is a diagram of a structure of an optical fiber connector according to an embodiment of this application. FIG. 2 is an exploded view of an optical fiber connector according to an embodiment of this application. FIG. 3 is a diagram of a structure of an optical fiber connector from which an outer housing assembly is removed according to an embodiment of this application. FIG. 3A is an exploded view of an optical fiber connector from which an outer housing assembly is removed according to an embodiment of this application. FIG. 4 is a sectional view of an optical fiber connector from which an outer housing assembly is removed according to an embodiment of this application. FIG. 5 is a diagram of arrangement of ceramic ferrules according to an embodiment of this application.

Embodiments of this application provide an optical fiber connector 100. Refer to FIG. 1 and FIG. 2. The optical fiber connector 100 may at least include an inner housing assembly 110, a ferrule assembly 120, and an optical cable 130. With reference to FIG. 3, FIG. 3A, and FIG. 4, the inner housing assembly 110 may have an accommodation cavity 111, and the ferrule assembly 120 may include a plurality of ceramic ferrules 121. One end of each of the ceramic ferrules 121 may be located in the accommodation cavity 111, and the other end may extend out of the inner housing assembly 110. The inner housing assembly 110 may provide fastening and protection for the ferrule assembly 120, to reduce or avoid damage to the ferrule assembly 120 caused by collision.

The accommodation cavity 111 may provide an accommodation space for installation of the ferrule assembly 120 in the inner housing assembly 110, allowing the ferrule assembly 120 to be installed in the inner housing assembly 110. For example, the accommodation cavity 111 of the inner housing assembly 110 may have an auxiliary structure for fastening the ferrule assembly 120, allowing the ferrule assembly 120 to be fastened in the accommodation cavity 111.

Each of the ceramic ferrules 121 may have a through-hole 1211 inside, the optical cable 130 may include a plurality of optical fibers, and the plurality of optical fibers may penetrate through-holes 1211 of the ceramic ferrules 121. Refer to FIG. 5. The plurality of ceramic ferrules 121 may be arranged in an array including M rows and N columns, where M≥2, and N≥2. For example, M may be equal to 2, 3, 4, or the like, and a value of N may also be equal to 2, 3, 4, or the like. In this embodiment of this application, an example in which M=2 and N=2, in other words, four ceramic ferrules 121 are arranged in an array including two rows and two columns is used for description. The four ceramic ferrules 121 may be located in the same inner housing assembly 110.

The optical fiber connector 100 may be configured to connect to a connection box. For example, two optical fiber connectors 100 each may be interconnected to an adapter on the connection box. For example, one of the optical fiber connectors 100 may be located inside the connection box, and is connected to the adapter from the inside of the connection box, while the other optical fiber connector 100 may be located outside the connection box, and is connected to the adapter from the outside of the connection box. In this way, the two optical fiber connectors 100 may be connected via the adapter. In this case, ceramic ferrules 121 in the two optical fiber connectors 100 may be interconnected in a one-to-one manner, so that optical fibers in the ceramic ferrules 121 are interconnected, to implement optical signal transmission.

For example, there may be sleeves whose quantity matches that of the ceramic ferrules 121 in the adapter, and the ceramic ferrules 121 in the two optical fiber connectors 100 may be respectively inserted into the sleeves, allowing the ceramic ferrules 121 at two ends of the adapter to be interconnected via the sleeves, to implement the optical signal transmission.

In comparison with a plastic ferrule structure in conventional technologies, in the optical fiber connector 100 provided in embodiments of this application, the plurality of ceramic ferrules 121 arranged in an array are used, and the ceramic ferrules 121 are enabled to be located in the same inner housing assembly 110, where the ceramic ferrule 121 has high strength and stiffness, so that precision of the ferrule can be improved, and ceramic ferrules 121 at two ends can be better aligned during interconnection between optical fiber connectors 100. This helps improve alignment precision of optical fibers in the ceramic ferrules 121, and can effectively reduce a loss of transmission between optical fibers. Therefore, efficiency of optical signal transmission between the optical fiber connectors 100 is effectively improved.

In addition, the ceramic ferrule 121 has a smooth surface and is easy to clean, effectively preventing entry of dust on the surface of the ceramic ferrule 121, and avoiding impact of excessive dust on the surface of the ceramic ferrule 121 on optical signal transmission. This helps further reduce the loss and improve the optical signal transmission efficiency.

In addition, the ceramic ferrule 121 has high stiffness and strength, effectively reducing or avoiding damage or fracture of the ferrule. This helps improve reliability and stability of the optical signal transmission between the optical fiber connectors 100.

In comparison with another optical fiber connector structure with ceramic ferrules in conventional technologies, in this embodiment of this application, the plurality of ceramic ferrules 121 are disposed in the same inner housing assembly 110, in which the ceramic ferrules 121 may share a same housing. This makes arrangement between the ceramic ferrules 121 more compact, and reduce space occupied by the housing. Therefore, a size of an optical fiber connector 100 is effectively reduced and a miniaturization design of the optical fiber connector 100 is improved.

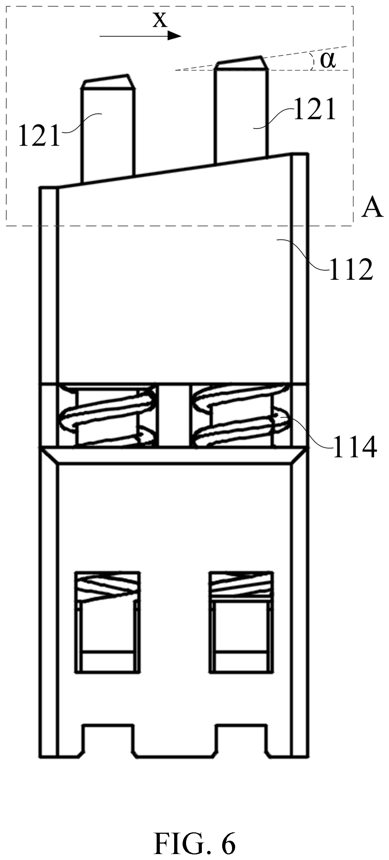

FIG. 6 is a diagram of a structure of inclination of ceramic ferrules according to an embodiment of this application.

Refer to FIG. 6. In this embodiment of this application, end faces of the ceramic ferrules 121 may be all inclined planes with a same inclination direction. For example, as shown in FIG. 6, the ceramic ferrules 121 may be inclined in a direction from a $1^{st}$ row to an $M^{th}$ row (that is, an x direction in FIG. 6), for example, inclined upward in a positive x direction as shown in FIG. 6, or inclined downward in the positive x direction.

Alternatively, in some examples, the ceramic ferrules 121 may be inclined in a direction from a $1^{st}$ column to an $N^{th}$ column (refer to a y direction in FIG. 5), where the y direction is perpendicular to the x direction. For example, the ceramic ferrules 121 may be inclined downward in a positive y direction as shown in FIG. 5, or inclined upward in the positive y direction. Specifically, an inclination direction of the ceramic ferrules 121 may be set based on a specific application scenario. This is not limited in this application. In this embodiment of this application, an example in which the ceramic ferrules 121 are inclined upward in the positive x direction in FIG. 6 is used for description.

An optical fiber may include an optical fiber body and a cladding disposed around the optical fiber body. The optical fiber body is for optical signal transmission, and the cladding provides protection for the optical fiber body, to reduce or avoid damage to the optical fiber body. During interconnection between two ceramic ferrules 121, optical fibers in the ceramic ferrules 121 are coaxially interconnected via the ceramic ferrules 121, to implement optical signal transmission. During the optical signal transmission, at an interconnection part of two optical fibers, light radiates around and is reflected. A part of the light is reflected to the optical fiber body, and the other part of the reflection light is reflected to the cladding disposed around the optical fiber body. Reflection light reflected to the optical fiber body causes interference to an optical signal transmitted in the optical fiber body, affecting normal transmission of the optical signal.

In this embodiment of this application, the end face of the ceramic ferrule 121 is set as an inclined plane. At the interconnection part of the optical fibers, in a process in which the light radiates and is reflected, the reflection light may be reflected to the cladding under an action of the inclined plane, instead of being reflected to the optical fiber body. In this way, the reflected light in the optical fiber body can be effectively reduced or avoided. Therefore, impact of excessive reflected light in the optical fiber body on the normal transmission of the optical signal can be effectively avoided. This helps improve optical signal transmission efficiency.

For example, in this embodiment of this application, an inclination angle of the inclined plane may be $\alpha$, and a value of $\alpha$ may range from 5° to 10°. For example, in this embodiment of this application, the value of $\alpha$ may be 8°. In this way, the light can be better reflected to the cladding. Therefore, the reflected light in the optical fiber body is effectively reduced.

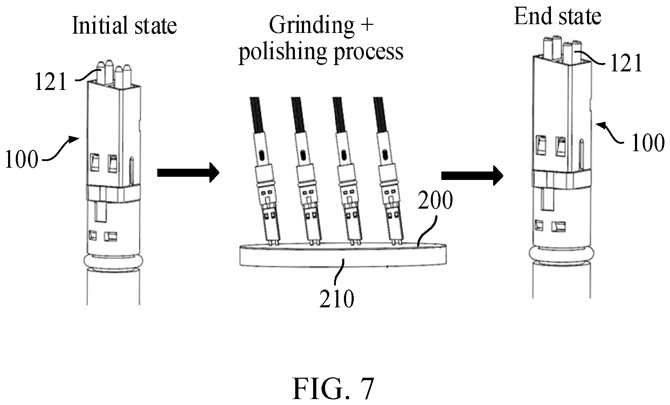

FIG. 7 is a diagram of a ceramic ferrule grinding process according to an embodiment of this application.

In this embodiment of this application, the inclined plane of the end face of the ceramic ferrule 121 may be formed in a grinding manner. For example, as shown in FIG. 7, the end face of the ceramic ferrule 121 may be ground by using a grinding sandpaper 200. For example, the grinding sandpaper 200 may be laid on a grinding pad 210, and the ferrule assembly 120 may be inclined relative to a plane of the grinding sandpaper 200, and then is ground on the grinding sandpaper 200, to form the inclined plane on the end face of the ceramic ferrule 121.

For example, as shown in FIG. 7, in an initial state, end faces of ceramic ferrules 121 are in a planar shape. After being ground on the grinding sandpaper 200, in an end state, the end faces of the ceramic ferrules 121 may be ground to be in an inclined shape.

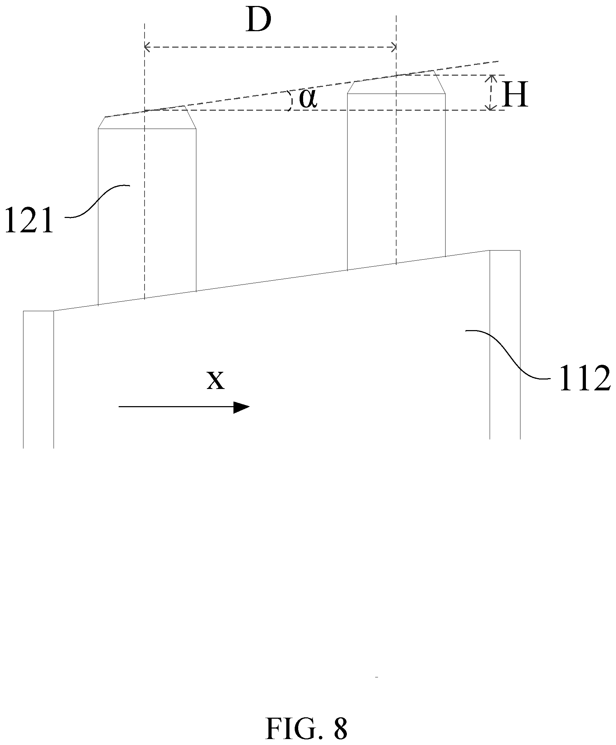

FIG. 8 is an enlarged view of an area A in FIG. 6.

In this embodiment of this application, in the direction from the 1st row to the Mth row, the end faces of the ceramic ferrules 121 may be located in a same inclined plane. Alternatively, in the direction from the 1st column to the Nth column, the end faces of the ceramic ferrules 121 may be located in a same inclined plane. For example, as shown in FIG. 8, the direction from the 1st row to the Mth row (that is, the x direction in FIG. 8) is used as an example. The end faces of the ceramic ferrules 121 may be located in the same inclined plane in the positive x direction. For example, as shown in FIG. 8, the end faces of the ceramic ferrules 121 may gradually rise in the positive x direction, so that the end faces of the ceramic ferrules 121 are located in the same inclined plane.

In this way, in a process of grinding the end face of the ceramic ferrule 121, all end faces of the ceramic ferrules 121 may be ground at one time. This helps improve grinding efficiency of the ceramic ferrules 121.

The end faces of the ceramic ferrules 121 may satisfy the following formula:

$$H = D \tan \alpha$$

Refer to FIG. 8. H is a height difference between centers of end faces of two adjacent ceramic ferrules 121 in the inclination direction, D is a distance between center lines of the two adjacent ceramic ferrules 121 in the inclination direction, and $\alpha$ is an inclination angle of the end faces of the ceramic ferrules 121.

Height differences between centers of the end faces of the ceramic ferrules 121 satisfy the formula. In this way, in the inclination direction, the end faces of the ceramic ferrules 121 gradually rise in a stepped shape, allowing the end faces of the ceramic ferrules 121 to be located in the same inclined plane. This facilitates grinding of the end faces of the ceramic ferrules 121, and effectively improved grinding efficiency.

For example, before the ceramic ferrules 121 are ground, the end faces of the ceramic ferrules 121 are in the planar shape. In the inclination direction, heights of the end faces of the two adjacent ceramic ferrules 121 may differ by H, so that the ceramic ferrules 121 are arranged in a stepped shape. In this way, in a process of grinding the ceramic ferrules 121, sizes of parts that are ground from the ceramic ferrules 121 may be the same, so that there are fewer or no cases in which the sizes of the parts that are ground from the ceramic ferrules 121 are different. This helps improve grinding evenness of the ceramic ferrules 121 and improve grinding efficiency.

For values in embodiments of this application, it should be noted herein that the values in embodiments of this application are all approximate values, and an error within a specific range may exist due to impact of a manufacturing process. Persons skilled in the art may consider that the error is negligible.

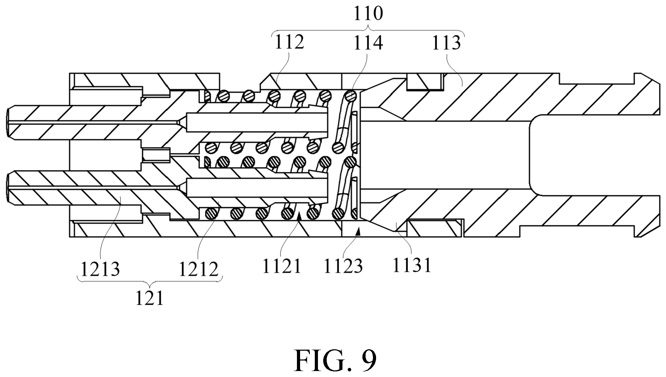

FIG. 9 is a diagram of a connection between a front housing and a rear housing according to an embodiment of this application.

Refer to FIG. 9. The inner housing assembly 110 of the optical fiber connector 100 may include a front housing 112 and a rear housing 113, and a front end of the rear housing 113 may be connected to a rear end 1124 of the front housing 112. Each ceramic ferrule 121 may include a connection portion 1212 and an insertion portion 1213, the front housing 112 may have a first cavity 1121, the connection portion 1212 of the ceramic ferrule 121 may be located in the first cavity 1121 of the front housing 112, and the insertion portion 1213 may extend out of a front end of the front housing 112. The insertion portion 1213 may be connected to the adapter, to be interconnected to a ceramic ferrule 121 in another optical fiber connector 100 via the adapter.

One end of the connection portion 1212 of the ceramic ferrule 121 may abut against the front housing 112, and the other end may abut against the rear housing 113. The connection portion 1212 of the ceramic ferrule 121 may be clamped between the front housing 112 and the rear housing 113, to implement installation and fastening of the ceramic ferrule 121 in the inner housing assembly 110. This can effectively avoid detachment between the ceramic ferrule 121 and the inner housing assembly 110, and helps improve reliability and stability of a connection between the ceramic ferrule 121 and the inner housing assembly 110.

Still refer to FIG. 9. The inner housing assembly 110 may further include spring parts 114, the connection portion 1212 of each ceramic ferrule 121 may be sleeved with a spring part 114. One end of the spring part 114 may abut against the ceramic ferrule 121, and the other end may abut against the rear housing 113. In this way, the connection portion 1212 of the ceramic ferrule 121 may elastically abut against the rear housing 113 via the spring part 114, and the spring part 114 may provide an elastic buffer between the ceramic ferrule 121 and the rear housing 113, so that rigid impact between the ceramic ferrule 121 and the rear housing 113 can be reduced or avoided, and tightness of the connection between the ceramic ferrule 121 and the inner housing assembly 110 is not affected by rigid contact between the ceramic ferrule 121 and the rear housing 113. This helps improve the tightness of the connection between the ceramic ferrule 121 and the inner housing assembly 110.

In a process in which two ceramic ferrules 121 are interconnected, one ceramic ferrule 121 may generate an extrusion force on an elastic part under an interconnection force of the other ceramic ferrule 121, so that the spring part 114 is in a compressed state. The spring part 114 in the compressed state has a resilience force, and the resilient force may drive the ceramic ferrule 121 to extrude toward the other ceramic ferrule 121, so that the two ceramic ferrules 121 can be closely fitted to each other. Therefore, stability of the interconnection between the two ceramic ferrules 121 is effectively improved, and optical signal transmission efficiency is effectively improved.

Still refer to FIG. 9. The front housing 112 may be provided with a first clamping slot 1123, and the rear housing 113 may have a first clamping portion 1131 cooperating with the first clamping slot 1123. The first clamping portion 1131 may be clamped in the first clamping slot 1123, so that the front housing 112 and the rear housing 113 may be connected through cooperation between the first clamping portion 1131 and the first clamping slot 1123. For example, the connection between the front housing 112 and the rear housing 113 is implemented through the cooperation between the first clamping portion 1131 and the first clamping slot 1123. The connection between the front housing 112 and the rear housing 113 is reliable, simple in structure, and easy to operate, so that detachment between the front housing 112 and the rear housing 113 can be effectively avoided, and reliability and firmness of the connection between the front housing 112 and the rear housing 113 can be improved. In addition, this further helps improve assembly efficiency between the front housing 112 and the rear housing 113, and improve production efficiency of the optical fiber connector 100.

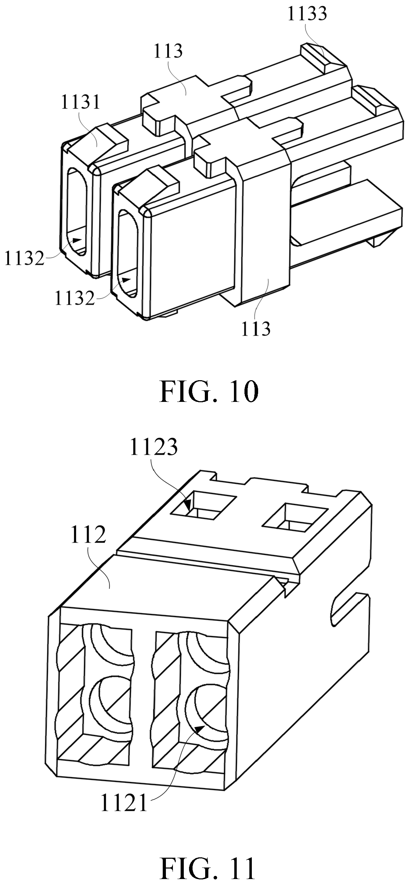

FIG. 10 is a diagram of a structure of a rear housing according to an embodiment of this application. FIG. 11 is a diagram of a structure of a front housing according to an embodiment of this application.

For example, in this embodiment of this application, as shown in FIG. 10, the inner housing assembly 110 may have two rear housings 113, the two rear housings 113 may be disposed in parallel, and each rear housing 113 may have two first clamping portions 1131. Correspondingly, as shown in FIG. 11, the front housing 112 may be provided with four first clamping slots 1123 cooperating with first clamping portions 1131, and the four first clamping slots 1123 may respectively correspond to first clamping portions 1131 on the two rear housings 113, so that the first clamping portions 1131 on the two rear housings 113 may be respectively clamped in the first clamping slots 1123 on the front housing 112.

For example, the two first clamping portion 1131 on each rear housing 113 may be respectively located on two sides of the rear housing 113, and correspondingly, the first clamping slots 1123 on the front housing 112 are also respectively located on two sides of the front housing 112. This can improve uniformity of a connection between the rear housing 113 and the front housing 112, and helps improve reliability and stability of the connection between the front housing 112 and the rear housing 113.

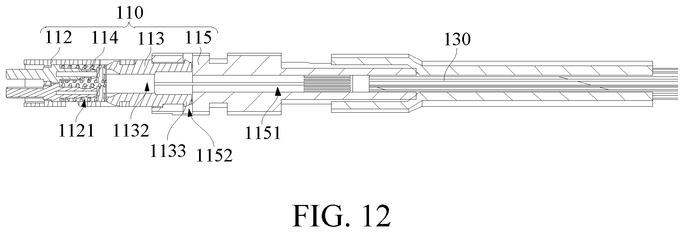

FIG. 12 is a diagram of a structure of a connection between a front housing, a rear housing, and a base according to an embodiment of this application.

Refer to FIG. 12. The inner housing assembly 110 may further include a base 115. The base 115 may be connected to the rear housing 113, and the base 115 may be located at one end of the rear housing 113 away from the front housing 112. The rear housing 113 may have a second cavity 1132 connected to the first cavity 1121, and the base 115 may have a third cavity 1151 connected to the second cavity 1132. The optical cable 130 may be located in the third cavity 1151, and optical fibers in the optical cable 130 may sequentially pass through the third cavity 1151, the second cavity 1132, and the first cavity 1121, and penetrate the through-holes 1211 of the ceramic ferrules 121.

The base 115 may fasten the optical cable 130 in the inner housing assembly 110, so as to improve firmness and reliability of disposing the optical cable 130 in the inner housing assembly 110.

Still refer to FIG. 12. The rear housing 113 may have a second clamping portion 1133, the base 115 may be provided with a second clamping slot 1152 cooperating with the second clamping portion 1133, and the second clamping portion 1133 may be clamped in the second clamping slot 1152. For example, the second clamping portion 1133 and the first clamping portion 1131 may be disposed opposite to each other, the one end of the rear housing 113 may be connected to the front housing 112 via the first clamping portion 1131, and the other end may be connected to the base 115 via the second clamping portion 1133, to implement assembly of the inner housing assembly 110. This can improve firmness and reliability of the connection between the front housing 112, the rear housing 113, and the base 115, effectively avoid detachment between the base 115, the rear housing 113, and the front housing 112, and helps improve overall structural stability of the inner housing assembly 110.

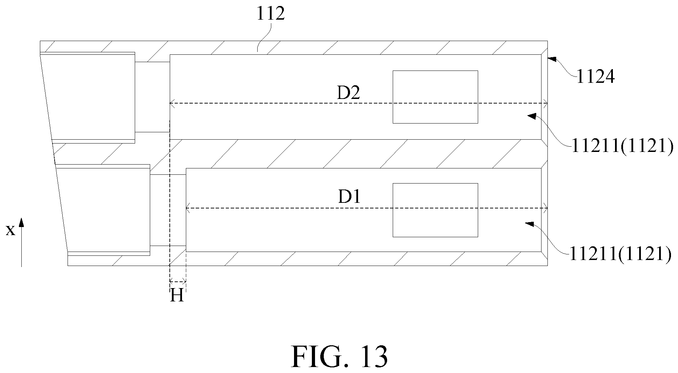

FIG. 13 is a sectional view of a front housing according to an embodiment of this application.

Refer to FIG. 13. In a possible implementation, the first cavity 1121 of the front housing 112 may include M sub-cavities 11211, and the M sub-cavities 11211 may be sequentially arranged in the direction from the 1st row to the Mth row (that is, an x direction in FIG. 13), and each of the sub-cavities 11211 has N ceramic ferrules 121. In this way, the ceramic ferrules 121 may be arranged in a manner of M rows and N columns.

Alternatively, in some examples, the first cavity 1121 of the front housing 112 may include N sub-cavities 11211, the N sub-cavities 11211 may be sequentially arranged in the direction from the 1st column to the Nth column (that is, a y direction), and each of the sub-cavities 11211 has M ceramic ferrules 121. In this way, the ceramic ferrules 121 may still be arranged in a manner of M rows and N columns.

Each of the sub-cavities 11211 may have a guiding pad 1122, and one end of the connection portion 1212 of the ceramic ferrule 121 may abut against the guiding pad 1122. The guiding pad 1122 may locate the ceramic ferrule 121 in an axis direction of the ceramic ferrule 121, to determine a specific position of the ceramic ferrule 121 in an axis direction of the inner housing assembly 110, so as to help improve precision of disposing the ceramic ferrule 121 in the inner housing assembly 110. In addition, the guiding pad 1122 can further avoid moving of the ceramic ferrule 121 in the axial direction. This helps improve reliability and stability of disposing the ceramic ferrule 121 in the inner housing assembly 110.

Still refer to FIG. 13. In the direction from the 1st row to the Mth row, heights of end faces that are of guiding pads 1122 and that face the ceramic ferrules 121 may be sequentially staggered in the axial direction, and a stagger distance between end faces of two adjacent guiding pads 1122 in the axial direction is H.

Alternatively, in the direction from the 1st column to the Nth column, heights of end faces that are of guiding pads 1122 and that face the ceramic ferrules 121 may be sequentially staggered in the axial direction, and a stagger distance between end faces of two adjacent guiding pads 1122 in the axial direction is H.

For example, a direction from the 1st row to a 2nd row is used as an example. Refer to FIG. 13. For ease of understanding, a planar rear end 1124 in the front housing 112 may be used as a reference. It may be understood as that in the direction from the 1st row to the 2nd row (that is, the x direction in FIG. 13), distances from the end faces that are of guiding pads 1122 and that face the ceramic ferrules 121 to the rear end 1124 gradually increase. For example, as shown in FIG. 13, in the x direction, distances from guiding pads 1122 in two sub-cavities 11211 to the rear end 1124 of the front housing 112 may be respectively D1 and D2, where D2 is greater than D1, and a distance difference between D2 and D1 is H. In this way, when the ceramic ferrules 121 abut against the guiding pads 1122, insertion portions 1213 of the ceramic ferrules 121 that extend out of the front housing 112 may also be arranged in a sequentially staggered manner in the x direction, to facilitate grinding of the ceramic ferrule 121.

H may satisfy the following formula:

$$\mathrm{H} = D \tan \alpha$$

D is a distance between center lines of two adjacent ceramic ferrules 121 in an inclination direction, and $\alpha$ is an inclination angle of the end face of the ceramic ferrule 121.

Stagger sizes of the end faces of the guiding pads 1122 satisfy the formula. In this way, when the ceramic ferrules 121 abut against the end faces of the guiding pads 1122, the end faces of the guiding pads 1122 may limit installation positions of the ceramic ferrules 121 in the axial direction, so that the ceramic ferrules 121 can be fastened in preset positions, and the ceramic ferrules 121 can be arranged in a ladder shape. In a process of assembling the ceramic ferrule 121 and the inner housing assembly 110, a problem of locating the ceramic ferrule in the axial direction does not need to be additionally considered, so that an installation process of the ceramic ferrule 121 can be simplified, and assembly efficiency between the ceramic ferrule 121 and the inner housing assembly 110 is improved.

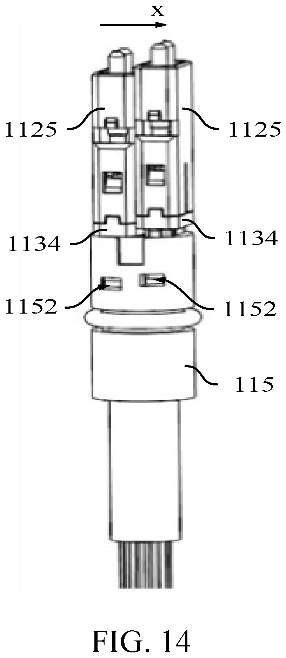

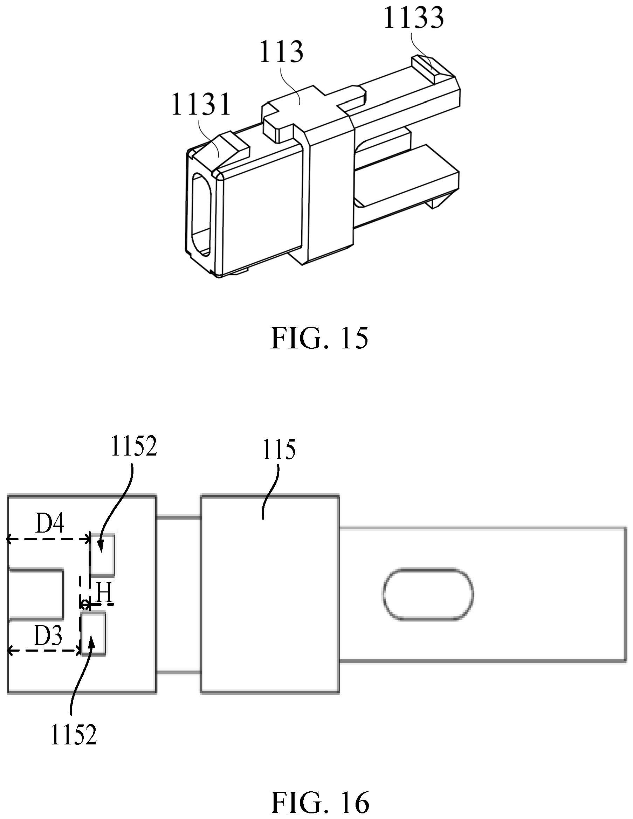

FIG. 14 is a diagram of a structure of another inner housing assembly according to an embodiment of this application. FIG. 15 is a diagram of a structure of a rear sub-housing according to an embodiment of this application. FIG. 16 is a main view of a base according to an embodiment of this application.

In another possible implementation, as shown in FIG. 14, the front housing 112 may include M front sub-housings 1125 disposed in parallel, the rear housing 113 may include M rear sub-housings 1134 disposed in parallel, and the M front sub-housings 1125 may be respectively connected to the M rear sub-housings 1134 in a one-to-one manner. For example, each sub-front housing 1125 may be connected to each rear sub-housing 1134 in a clamping manner. The M front sub-housings 1125 and the M rear sub-housings 1134 may be sequentially arranged in the direction from the 1st row to the Mth row (that is, an x direction in FIG. 14). Each group of connected sub-front housing 1125 and rear sub-housing 1134 may have N ceramic ferrules 121, so that ceramic ferrules 121 may be arranged in a manner of M rows and N columns.

For example, in this embodiment of this application, as shown in FIG. 14, there may be two front sub-housings 1125 and two rear sub-housings 1134, and there may be two ceramic ferrules 121 in each group of connected sub-front housing 1125 and rear sub-housing 1134, so that the ceramic ferrules 121 are arranged in a manner of two rows and two columns.

Alternatively, in some examples, the front housing 112 may include N front sub-housings 1125 disposed in parallel, the rear housing 113 may include N rear sub-housings 1134 disposed in parallel, and the N front sub-housings 1125 may be respectively connected to the N rear sub-housings 1134 in a one-to-one manner. For example, the N front sub-housings 1125 and the N rear sub-housings 1134 may be sequentially arranged in the direction from the 1st column to the Nth column (that is, a y direction). Each group of connected sub-front housing 1125 and rear sub-housing 1134 may have M ceramic ferrules 121, so that ceramic ferrules 121 may still be arranged in a manner of M rows and N columns.

With reference to FIG. 15 and FIG. 16, the base 115 may have a same quantity of second clamping slots 1152 as a quantity of rear sub-housings 1134, and the second clamping portion 1133 on the rear sub-housing 1134 may be respectively clamped in the second clamping slot 1152. In this way, each group of sub-front housing 1125 and rear sub-housing 1134 may be connected to the base 115 through cooperation between the second clamping portion 1133 and the second clamping slot 1152. This can effectively avoid detachment between the sub-front housing 1125, the rear sub-housing 1134, and the base 115, and helps improve structural stability of the inner housing assembly 110.

In the direction from the 1st row to the Mth row, distances from second clamping slots 1152 to an end face of the base 115 gradually increase, and a distance difference between two adjacent second clamping slots 1152 in an axis direction of the base 115 is H.

Alternatively, in the direction from the 1st column to the Nth column, distances from second clamping slots 1152 to an end face of the base 115 gradually increase, and a distance difference between two adjacent second clamping slots 1152 in an axis direction of the base 115 is H.

For example, as shown in FIG. 16, the direction from the 1st row to the Mth row is used as an example. For ease of understanding, an end face of the base 115 facing one end of the rear housing 113 may be used as a reference, and the end face is a planar structure. It may be understood as that the distances from the second clamping slots 1152 to the end face of the base 115 facing the end of the rear housing 113 gradually increase. For example, distances from two second clamping slots 1152 to the end face may be respectively D3 and D4, where D4 is greater than D3, and a distance difference between D4 and D3 is H. In this way, when the rear sub-housing 1134 is connected to the second clamping slot 1152 on the base 115, groups of rear sub-housings 1134 and the front sub-housings 113 may be arranged in a ladder shape, so that end faces of the ceramic ferrules 121 are also arranged in the ladder shape. This facilitates grinding of the ceramic ferrules 121.

H may satisfy the following formula:

$$\mathrm{H} = D \tan \alpha$$

D is a distance between center lines of two adjacent ceramic ferrules 121 in an inclination direction, and $\alpha$ is an inclination angle of the end face of the ceramic ferrule 121.

Second clamping slots 1152 on the base 115 satisfy the formula. In this way, when the rear sub-housing 1134 is clamped in the second clamping slot 1152 via the second clamping portion 1133, the second clamping slot 1152 may limit a position of the rear sub-housing 1134, so that the rear sub-housing 1134 and the front sub-housing 113 may be fastened in preset positions, and ceramic ferrules 121 in the sub-front housing 1125 and the rear sub-housing 1134 may also be distributed in the ladder shape in preset positions. In a process of assembling the ceramic ferrule 121 and the inner housing assembly 110, alignment of the ceramic ferrules in the axial direction does not need to be additionally considered, so that installation of the ceramic ferrule 121 can be simplified, and efficiency of assembly between the ceramic ferrule 121 and the inner housing assembly 110 is improved.

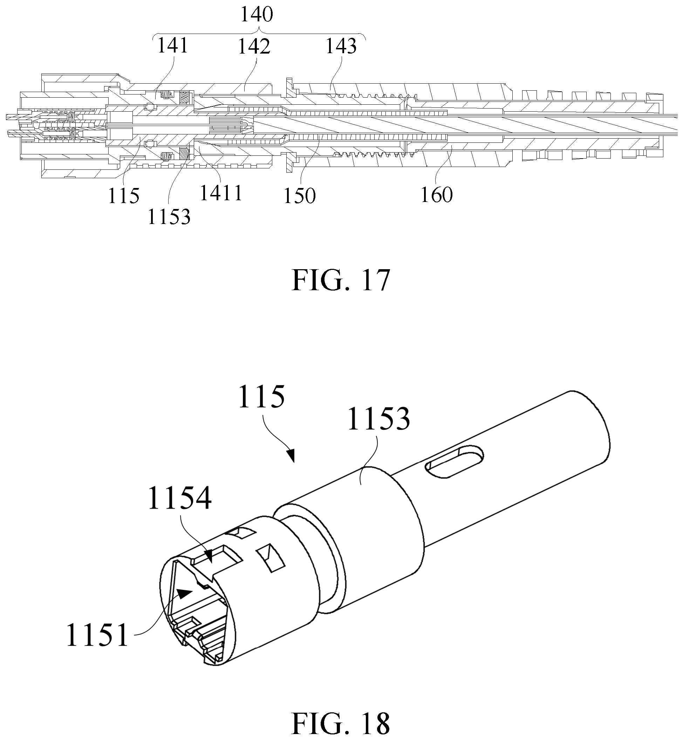

FIG. 17 is a sectional view of an optical fiber connector according to an embodiment of this application.

Refer to FIG. 17. The optical fiber connector 100 may further include an outer housing assembly 140. The outer housing assembly 140 may include a first housing 141 and a second housing 142. The first housing 141 may be sleeved over the inner housing assembly 110, and the second housing 142 may be sleeved over an outer circumference of the first housing 141 and rotatably connected to the first housing 141. The first housing 141 and the second housing 142 may be configured to cooperate with a structure on the adapter, so that the optical fiber connector 100 may be connected to the adapter.

For example, the adapter may have a guide rail structure cooperating with the first housing 141, the first housing 141 may be inserted into the guide rail, and the second housing 142 may be sleeved over the adapter. There may be a first chute and a second chute that are connected on an outer circumference of the adapter, where the first chute may extend in an axial direction of the adapter to an end face of the adapter, and the second chute may extend in a circumferential direction of the adapter. There may be a limiting post on an inner wall of the second housing 142, and the limiting post on the second housing 142 may cooperate with the first chute and the second chute, so that the second housing 142 may be connected to the adapter.

For example, the second housing 142 may rotate in an extension direction of the first chute and the second chute, so that the limiting post on the second housing 142 finally abuts against one end of the second chute. The second chute may limit and fasten the limiting post in the axial direction, to avoid moving of the second housing 142 in the axial direction of the adapter. This helps improve firmness and reliability of a connection between the optical fiber connector 100 and the adapter, and improve stability of cooperation between two optical fiber connectors 100.

Still refer to FIG. 17. In this embodiment of this application, the optical fiber connector 100 may further include a boot 143, at least a part of the boot 143 may be sleeved over at least a part of the first housing 141 and is threadedly connected to the first housing (141). For example, there may be an outer thread on an outer circumference of one end of the first housing 141, and there may be an inner thread cooperating with the outer thread on an inner wall of one end that is of the boot 143 and that faces the first housing 141. In a process in which the boot 143 is connected to the first housing 141, the outer thread may cooperate with the inner thread, so that the boot 143 may be connected to the first housing 141.

The boot 143 may be made of a rubber material, and has specific elasticity. The boot 143 may provide elastic protection for the optical cable 130. In a bending process of the optical cable 130, the boot 143 may increase a bending radius of the optical cable 130, to avoid breaking of the optical cable 130 due to an excessively small bending radius, so as to avoid impact of the breaking of the optical cable 130 on signal transmission between optical fiber connectors 100.

Still refer to FIG. 17. The optical fiber connector 100 may further include a first optical cable protective jacket 150, where the first optical cable protective jacket 150 may be sleeved over the optical cable 130, and one end of the first optical cable protective jacket 150 may be connected to the base 115. The first optical cable protective jacket 150 may also protect the optical cable 130, to increase the bending radius of the optical cable 130, so as to avoid the breaking of the optical cable 130 due to the excessively small bending radius. This helps prolong a service life of the optical cable 130.

Still refer to FIG. 17. The optical fiber connector 100 may further include a second optical cable protective jacket 160, where the second optical cable protective jacket 160 may also be sleeved over the optical cable 130, and the second optical cable protective jacket 160 may be located in the boot 143. The second optical cable protective jacket 160 and the first optical cable protective jacket 150 may be distributed in an extension direction of the optical cable 130. The second optical cable protective jacket 160 may also provide protection for the optical cable 130, to increase the bending radius of the optical cable 130, so as to effectively avoid the breaking of the optical cable 130 due to the excessively small bending radius. The second optical cable protective jacket 160 and the first optical cable protective jacket 150 may provide protection for the optical cable 130 at different positions. One end of the second optical cable protective jacket 160 may at least partially overlap one end of the first optical cable protective jacket 150, so that the second optical cable protective jacket 160 and the first optical cable protective jacket 150 can provide more comprehensive protection for the optical cable 130, to avoid the breaking of the optical cable 130.

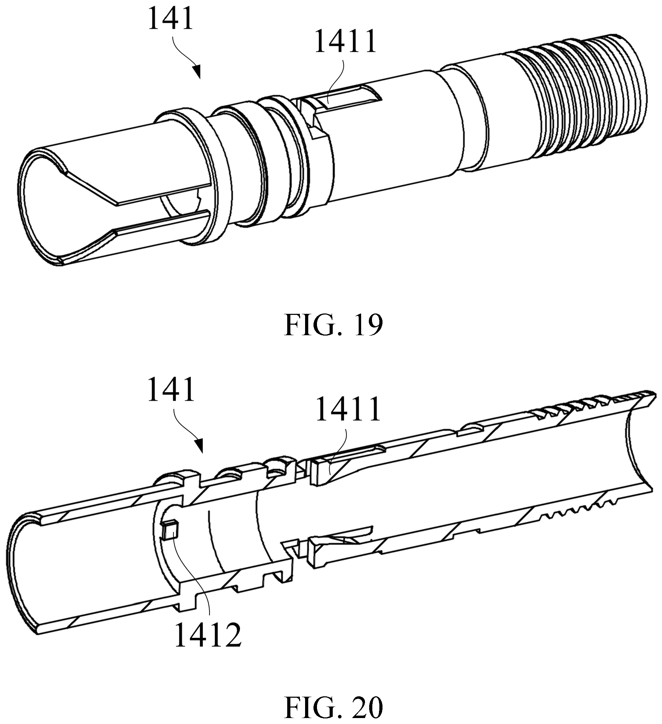

FIG. 18 is a diagram of a structure of a base according to an embodiment of this application. FIG. 19 is a diagram of a structure of a first housing according to an embodiment of this application. FIG. 20 is a sectional view of a first housing according to an embodiment of this application.

Refer to FIG. 18 and FIG. 19. An outer circumference of the base 115 has a shaft shoulder portion 1153, the first housing 141 may have an elastic clamping portion 1411, and the elastic clamping portion 1411 may abut against the shaft shoulder portion 1153 of the base 115. For example, the elastic clamping portion 1411 may face the inside of the first housing 141. In a process in which the base 115 penetrates the first housing 141, when the elastic clamping portion 1411 abuts against an end face of the shaft shoulder portion 1153, it indicates that the first housing 141 and the base 115 reach a cooperation position. Through cooperation between the shaft shoulder portion 1153 and the first clamping portion 1131, limiting in an axial direction can be implemented, and moving between the first housing 141 and the base 115 in the axial direction can be reduced or avoided. This helps improve reliability and stability of a connection between the outer housing assembly 140 and the inner housing assembly 110 in the axial direction.

Still refer to FIG. 18. The outer circumference of the base 115 may further have a groove 1154. With reference to FIG. 20, an inner wall of the first housing 141 may have a limiting protrusion 1412 cooperating with the groove 1154, and the limiting protrusion 1412 may be located in the groove 1154. The groove 1154 may perform a circumferential limiting function on the limiting protrusion 1412, to reduce or avoid rotation of the first housing 141 relative to the base 115. This helps improve reliability and stability of a circumferential connection between the first housing 141 and the base 115.

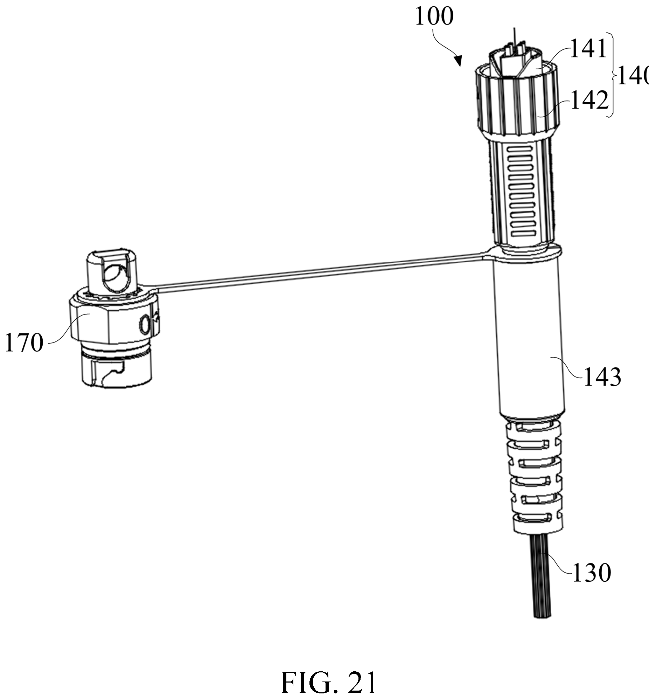

FIG. 21 is a diagram of a structure of a connection between a dust cap and an optical fiber connector according to an embodiment of this application.

Refer to FIG. 21. The optical fiber connector 100 may further include the dust cap 170. The dust cap 170 may cover one end that is of the front housing 112 assembly and that faces the insertion portion 1213 of the ceramic ferrule 121, and the dust cap 170 may be detachably connected to the front housing 112 assembly. The dust cap 170 may cover the front housing 112 assembly in a process in which the optical fiber connector 100 is not used, and is removed when the optical fiber connector 100 is used. The dust cap 170 may provide protection for the ferrule assembly 120, the inner housing assembly 110, and the like inside the outer housing assembly 140, to reduce or avoid entering of external stains such as dust, water stains, and oil stains into the ferrule assembly 120 inside the outer housing assembly 140, so as to avoid impact of entering of the stains into the ferrule assembly 120 on optical fiber signal transmission. This helps improve cleanliness of the ferrule assembly 120 and improve stability and reliability of the optical fiber connector 100.

The following describes an application scenario of the optical fiber connector 100 provided in embodiments of this application with reference to the accompanying drawings.

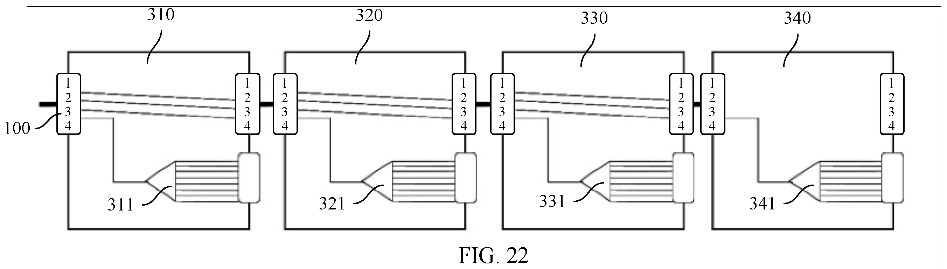

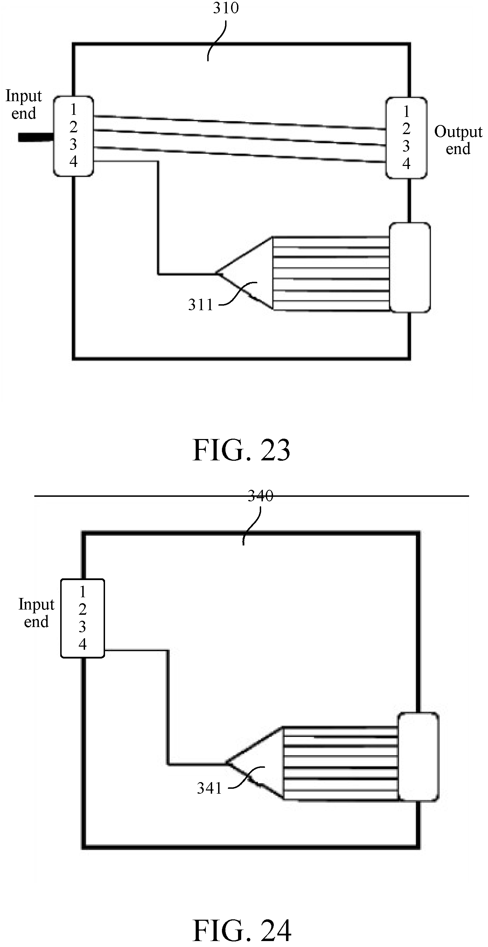

FIG. 22 is a diagram of an application link of optical fiber connectors according to an embodiment of this application. FIG. 23 is a diagram of an internal link of a first connection box according to an embodiment of this application. FIG. 24 is a diagram of an internal link of a fourth connection box according to an embodiment of this application.

The optical fiber connector 100 provided in embodiments of this application may be used in cascading with a plurality of connection boxes. For example, the connection box may be a fiber access terminal (fiber access terminal, FAT), and the plurality of connection boxes may be connected via optical fiber connectors 100. For example, as shown in FIG. 22, an example in which there are four ceramic ferrules 121 in the optical fiber connector 100 (also referred to as a 4-core optical fiber connector 100) is used, and four connection boxes may be selected. For ease of understanding, the four connection boxes may be sequentially denoted as a first connection box 310, a second connection box 320, a third connection box 330, and a fourth connection box 340, and the four ceramic ferrules 121 in the optical fiber connector 100 may be sequentially marked as a ferrule 1, a ferrule 2, a ferrule 3, and a ferrule 4.

For example, as shown in FIG. 22, one optical fiber connector 100 may be first inserted into one adapter on the first connection box 310, so that the optical fiber connector 100 may be connected to an optical fiber connector 100 inside the connection box via the adapter, to lead four optical fibers into the connection box. The four connection boxes may each have one optical splitter. For example, the first connection box 310 may have a first optical splitter 311, the second connection box 320 may have a second optical splitter 321, the third connection box 330 may have a third optical splitter 331, and the fourth connection box 340 may have a fourth optical splitter 341.

In the first connection box 310, one of the four optical fibers may be connected to an input end of the first optical splitter 311 in the first connection box 310, so that the optical fiber may be split into a plurality of optical fibers by using the first optical splitter 311 based on a specific ratio and then dropped into homes, the remaining three optical fibers may be led out by using an optical fiber connector 100 and connected to the second connection box 320.

In the second connection box 320, one of the three optical fibers may be connected to the second optical splitter 321, so that the optical fiber may be split into a plurality of optical fibers by using the second optical splitter 321 based on a specific ratio and then dropped into homes, the remaining two optical fibers may be led out by using an optical fiber connector 100 and connected to the third connection box 330.

In the third connection box 330, one of the two optical fibers may be connected to the third optical splitter 331, so that the optical fiber may be split into a plurality of optical fibers by using the third optical splitter 331 based on a specific ratio and then dropped into homes, the other fiber may be led out by using an optical fiber connector 100 and connected to the fourth connection box 340.

In the fourth connection box 340, a last optical fiber may be connected to the fourth optical splitter 341, so that the optical fiber may be split into a plurality of optical fibers by using the fourth optical splitter 341 based on a specific ratio and then dropped into homes.

An optical splitter in each connection box is connected to a ferrule 4 in the connection box. To enable an input port of an optical splitter in each connection box to be connected to an effective optical fiber for transmitting light, an input optical fiber and an output optical fiber in the connection box may be connected in a staggered manner. For example, as shown in FIG. 23, in the first connection box 310, an optical fiber corresponding to a ferrule 3 in the input end optical fiber connector 100 may be connected to a ferrule 4 in the output end optical fiber connector 100, an optical fiber corresponding to a ferrule 2 may be connected to a ferrule 3 in the output end optical fiber connector 100, and an optical fiber corresponding to a ferrule 1 may be connected to a ferrule 2 in the output end optical fiber connector 100. In this way, in the second connection box 320, an optical fiber connected to the second optical splitter 321 is actually the optical fiber corresponding to the ferrule 3 in the input optical fiber connector 100 of the first connection box 310.

Correspondingly, in the second connection box 320, an optical fiber corresponding to a ferrule 3 in an input end optical fiber connector 100 may be connected to a ferrule 4 in the output end optical fiber connector 100, an optical fiber corresponding to a ferrule 2 may be connected to a ferrule 3 in the output end optical fiber connector 100, and an optical fiber corresponding to a ferrule 1 may be connected to the ferrule 2 in the output end optical fiber connector 100. In this way, in the third connection box 330, an optical fiber connected to the third optical splitter 331 is actually the optical fiber corresponding to the ferrule 2 in the input optical fiber connector 100 of the first connection box 310.

Correspondingly, in the third connection box 330, an optical fiber corresponding to a ferrule 3 in an input end optical fiber connector 100 may be connected to a ferrule 4 in the output end optical fiber connector 100, an optical fiber corresponding to a ferrule 2 may be connected to a ferrule 3 in the output end optical fiber connector 100, and an optical fiber corresponding to a ferrule 1 may be connected to a ferrule 2 in the output end optical fiber connector 100. In this way, in the fourth connection box 340, as shown in FIG. 24, an optical fiber connected to the fourth optical splitter 341 is actually the optical fiber corresponding to the ferrule 1 in the input end optical fiber connector 100 of the first connection box 310.

An embodiment of this application further provides a connection box. The connection box may include a housing and an adapter. The adapter may be located on the housing. The adapter in the connection box may be configured to cooperate with the optical fiber connector 100 provided in any one of the foregoing scenarios. The adapter in the connection box cooperates with the foregoing optical fiber connector 100, so that an optical fiber connector 100 inside the connection box and an optical fiber connector 100 outside the connection box may be interconnected via the adapter, to implement optical signal transmission, so as to effectively improve stability and reliability of the signal transmission.

For example, the adapter may have a same quantity of guiding sleeves as a quantity of ceramic ferrules 121 in the optical fiber connector 100, and guiding sleeves are configured to be corresponding to arrangement of ceramic ferrules 121. For example, in this embodiment of this application, the guiding sleeves may alternatively be arranged in an array including M rows and N columns, so that the guiding sleeves may be in one-to-one correspondence with the ceramic ferrules 121.

The guiding sleeve may have a guiding through-hole, and two ends of the guiding through-hole each may be configured for insertion of the ceramic ferrule 121. For example, one end of the guiding through-hole may be connected to the outside of the connection box, and the other end may be connected to the inside of the connection box. A ceramic ferrule 121 in the optical fiber connector 100 outside the connection box may be inserted into one end of the guiding through-hole, and a ceramic ferrule 121 in the optical fiber connector 100 inside the connection box may be inserted into the other end of the guiding through-hole, so that the two ceramic ferrules 121 may be interconnected via the guiding sleeve, to implement interconnection between optical fibers. In this way, connection coaxiality of the ceramic ferrules 121 can be effectively improved, and interconnection precision of the ceramic ferrules 121 is improved. Therefore, efficiency of signal transmission between optical fibers is effectively improved.

In descriptions of embodiments of this application, it should be noted that, unless otherwise explicitly stipulated and restricted, terms "installation", "joint connection", and "connection" should be understood broadly, which, for example, may be a fixed connection, may be an indirect connection by using a medium, may be an internal communication between two components, or may be an interactive relationship between two components. A person of ordinary skill in the art may understand specific meanings of the terms in embodiments of this application based on specific cases. Terms such as "first", "second", "third", "fourth", and the like (if any) are intended to distinguish between similar objects but do not necessarily indicate a specific order or sequence.

Finally, it should be noted that the foregoing embodiments are merely intended to describe the technical solutions of embodiments of this application, and are not intended to limit embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An optical fiber connector, comprising an inner housing assembly (110), a ferrule assembly (120), and an optical cable (130), wherein

the inner housing assembly (110) has an accommodation cavity (111), the ferrule assembly (120) comprises a plurality of ceramic ferrules (121), one end of each of the ceramic ferrules (121) is located in the accommodation cavity (111), and the other end of each of the ceramic ferrules (121) extends out of the inner housing assembly (110);
each of the ceramic ferrules (121) has a through-hole (1211), the optical cable (130) comprises a plurality of optical fibers, and the plurality of optical fibers penetrate through-holes (1211) of the ceramic ferrules (121); and
the plurality of ceramic ferrules (121) are arranged in an array comprising M rows and N columns, wherein M≥2, and N≥2.

2. The optical fiber connector according to claim 1, wherein end faces of the ceramic ferrules (121) are all inclined planes with a same inclination direction.

3. The optical fiber connector according to claim 1 or 2, wherein in a direction from a 1st row to an Mth row, the end faces of the ceramic ferrules (121) are located in a same inclined plane; or
in a direction from a 1st column to an Nth column, the end faces of the ceramic ferrules (121) are located in a same inclined plane.

4. The optical fiber connector according to any one of claims 1 to 3, wherein the end faces of the ceramic ferrules (121) satisfy the following formula:

$$H = D \tan \alpha,$$

wherein H is a height difference between centers of end faces of two adjacent ceramic ferrules (121) in the inclination direction, D is a distance between center lines of the two adjacent ceramic ferrules (121) in the inclination direction, and $\alpha$ is an inclination angle of the end faces of the ceramic ferrules (121).

5. The optical fiber connector according to any one of claims 1 to 4, wherein the inner housing assembly (110) comprises a front housing (112) and a rear housing (113), and a front end of the rear housing (113) is connected to a rear end of the front housing (112);

each of the ceramic ferrules (121) comprises a connection portion (1212) and an insertion portion (1213) that are connected, the front housing (112) has a first cavity (1121), the connection portion (1212) is located in the first cavity (1121), and the insertion portion (1213) extends out of a front end of the front housing (112); and
one end of the connection portion (1212) abuts against the front housing (112), and the other end of the connection portion (1212) abuts against the rear housing (113).

6. The optical fiber connector according to claim 5, wherein the first cavity (1121) of the front housing (112) comprises M sub-cavities (11211), the M sub-cavities (11211) are sequentially arranged in the direction from the 1st row to the Mth row, and each of the sub-cavities (11211) has N ceramic ferrules (121); or

the first cavity (1121) of the front housing (112) comprises N sub-cavities (11211), the N sub-cavities (11211) are sequentially arranged in the direction from the 1st column to the Nth column, and each of the sub-cavities (11211) has M ceramic ferrules (121); and
each of the sub-cavities (11211) has a guiding pad (1122), and the one end of the connection portion (1212) abuts against the guiding pad (1122).

7. The optical fiber connector according to claim 6, wherein in the direction from the 1st row to the Mth row, heights of end faces that are of guiding pads (1122) and that face the ceramic ferrules (121) are sequentially staggered in an axial direction, and a stagger distance between end faces of two adjacent guiding pads (1122) in the axial direction is H; or

in the direction from the 1st column to the Nth column, heights of end faces that are of guiding pads (1122) and that face the ceramic ferrules (121) are sequentially staggered in an axial direction, and a stagger distance between end faces of two adjacent guiding pads (1122) in the axial direction is H; and
H satisfies the following formula:

$$H = D \tan \alpha,$$

wherein D is the distance between the center lines of the two adjacent ceramic ferrules (121) in the inclination direction, and $\alpha$ is the inclination angle of the end faces of the ceramic ferrules (121).

8. The optical fiber connector according to any one of claims 5 to 7, wherein the inner housing assembly (110) further comprises spring parts (114), and the connection portion (1212) of each of the ceramic ferrules (121) is sleeved with a spring part (114); and one end of the spring part (114) abuts against the ceramic ferrule (121), and the other end of the spring part (114) abuts against the rear housing (113).

9. The optical fiber connector according to any one of claims 5 to 8, wherein the front housing (112) is provided with a first clamping slot (1123), and the rear housing (113) has a first clamping portion (1131) cooperating with the first clamping slot (1123); and the first clamping portion (1131) is clamped in the first clamping slot (1123), and the front housing (112) and the rear housing (113) are connected through cooperation between the first clamping portion (1131) and the first clamping slot (1123).

10. The optical fiber connector according to any one of claims 5 to 9, wherein the inner housing assembly (110) further comprises a base (115) connected to the rear housing (113), and the base (115) is located at one end of the rear housing (113) far away from the front housing (112);

the rear housing (113) has a second cavity (1132) connected to the first cavity (1121), and the base (115) has a third cavity (1151) connected to the second cavity (1132); and
the optical cable (130) is located in the third cavity (1151), and the optical fibers in the optical cable (130) sequentially pass through the third cavity (1151), the second cavity (1132), and the first cavity (1121), and penetrate the through-holes (1211) of the ceramic ferrules (121).

11. The optical fiber connector according to claim 10, wherein the rear housing (113) has a second clamping portion (1133), the base (115) is provided with a second clamping slot (1152) cooperating with the second clamping portion (1133), and the second clamping portion (1133) is clamped in the second clamping slot (1152).

12. The optical fiber connector according to claim 11, wherein the front housing (112) comprises M front sub-housings (1125) (112) disposed in parallel, the rear housing (113) comprises M rear sub-housings (1134) disposed in parallel, and the M front sub-housings (1125) (112) are respectively connected to the M rear sub-housings (1134), wherein

each group of connected front sub-housing (1125) (112) and rear sub-housing (1134) has N ceramic ferrules (121); or
the front housing (112) comprises N front sub-housings (1125) (112) disposed in parallel, the rear housing (113) comprises N rear sub-housings (1134) disposed in parallel, and the N front sub-housings (1125) (112) are respectively connected to the N rear sub-housings (1134), wherein
each group of connected front sub-housing (1125) (112) and rear sub-housing (1134) has M ceramic ferrules (121).

13. The optical fiber connector according to claim 12, wherein the base (115) has a same quantity of second clamping slots (1152) as a quantity of rear sub-housings (1134), and the second clamping portion (1133) on the rear sub-housing (1134) is respectively clamped in the second clamping slot (1152).

14. The optical fiber connector according to claim 12, wherein in the direction from the 1st row to the Mth row, distances from second clamping slots (1152) to an end face of the base (115) gradually increase, and a distance difference between two adjacent second clamping slots (1152) in an axis direction of the base (115) is H; or

in the direction from the 1st column to the Nth column, distances from second clamping slots (1152) to an end face of the base (115) gradually increase, and a distance difference between two adjacent second clamping slots (1152) in an axis direction of the base (115) is H; and
H satisfies the following formula:

$$\mathrm{H} = D \tan \alpha,$$

wherein D is the distance between the center lines of the two adjacent ceramic ferrules (121) in the inclination direction, and $\alpha$ is the inclination angle of the end faces of the ceramic ferrules (121).

15. The optical fiber connector according to any one of claims 10 to 14, further comprising an outer housing assembly (140), wherein the outer housing assembly (140) comprises a first housing (141) and a second housing (142), wherein
the first housing (141) is sleeved over the inner housing assembly (110), and the second housing (142) is sleeved over an outer circumference of the first housing (141) and rotatably connected to the first housing (141).

16. The optical fiber connector according to claim 15, wherein an outer circumference of the base (115) has a shaft shoulder portion (1153), the first housing (141) has an elastic clamping portion (1411), and the elastic clamping portion (1411) abuts against an end face of the shaft shoulder portion (1153).

17. The optical fiber connector according to claim 15 or 16, wherein the outer circumference of the base (115) is further provided with a groove (1154), an inner wall of the first housing (141) has a limiting protrusion (1412) cooperating with the groove (1154), and the limiting protrusion (1412) is located in the groove (1154).

18. The optical fiber connector according to any one of claims 15 to 17, wherein the outer housing assembly (140) further comprises a boot (143), and at least a part of the boot (143) is sleeved over at least a part of the first housing (141) and is threadedly connected to the first housing (141).

19. The optical fiber connector according to any one of claims 15 to 18, further comprising a first optical cable protective jacket (150), wherein the first optical cable protective jacket (150) is sleeved over the optical cable (130), and one end of the first optical cable protective jacket (150) is connected to the base (115).

**20.** The optical fiber connector according to claim 18, further comprising a second optical cable protective jacket (160), wherein the second optical cable protective jacket (160) is sleeved over the optical cable (130), and the second optical cable protective jacket (160) is located in the boot (143).

**21.** A connection box, comprising a housing and an adapter, wherein the adapter is located on the housing, and the adapter is configured to cooperate with the optical fiber connector according to any one of claims 1 to 20.

**22.** The connection box according to claim 21, wherein the adapter has a same quantity of guiding sleeves as a quantity of ceramic ferrules (121), and guiding sleeves are configured to be corresponding to arrangement of ceramic ferrules (121); and
each guiding sleeve has a guiding through-hole (1211), and two ends of the guiding through-hole (1211) each are configured for insertion of the ceramic ferrule (121).

FIG. 1

FIG. 2

FIG. 3

FIG. 3A

FIG. 4

FIG. 5

FIG. 6

FIG. 7

FIG. 8

FIG. 9

FIG. 10

FIG. 11

FIG. 12

112

1124

D2

11211(1121)

D1

11211(1121)

x

H

FIG. 13

FIG. 14

1133

113

1131

FIG. 15

1152

115

D4

H

D3

1152

FIG. 16

FIG. 17

FIG. 18

141

1411

**FIG. 19**

141

1411

1412

**FIG. 20**

FIG. 21

FIG. 22

310

Input

1
2
3
4

311

## FIG. 23

340

Input
end

1
2
3
4

341

## FIG. 24

## INTERNATIONAL SEARCH REPORT

| International application No. |
| --- |
| **PCT/CN2024/134373** |

| A. | CLASSIFICATION OF SUBJECT MATTER |
| --- | --- |

G02B6/38(2006.01)i; G02B6/44(2006.01)i

According to International Patent Classification (IPC) or to both national classification and IPC

| B. | FIELDS SEARCHED |
| --- | --- |

Minimum documentation searched (classification system followed by classification symbols)

IPC: G02B6

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; GBTXT; JPTXT; EPTXT; ENTXTC; Web of Science: 华为, 连接器, 陶瓷插针, 陶瓷插芯, 陶瓷套圈, 陶瓷, 插针, 插芯, 套圈, 阵列, 行, 列, 多个, 若干, 斜, 同一面, 相同面, connector?, ceramic pin?, ceramic ferrule?, ceramic, pin?, ferrule?, array, row, column, multiple, several, slope, incline, sameface, same face

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2009257722 A1 (AMPHENOL CORP.) 15 October 2009 (2009-10-15) description, paragraphs [0027]-[0045], and figures 1-16b | 1, 5, 8, 9 |
| Y | US 2009257722 A1 (AMPHENOL CORP.) 15 October 2009 (2009-10-15) description, paragraphs [0027]-[0045], and figures 1-16b | 2-22 |
| Y | CN 208432758 U (NINGBO RONTA PHOTOELECTRIC TECHNOLOGY CO., LTD.) 25 January 2019 (2019-01-25) description, paragraphs [0016]-[0020], and figures 1 and 2 | 2-22 |
| Y | US 6572276 B1 (EUROMICRON WERKZEUGE GMBH) 03 June 2003 (2003-06-03) description, column 4, line 11 to column 7, line 19, and figures 2 and 10 | 6-22 |
| Y | CN 114545561 A (HUAWEI TECHNOLOGIES CO., LTD.) 27 May 2022 (2022-05-27) description, paragraph [0099], and figure 2 | 21, 22 |
| A | CN 102047161 A (HUBER+SUHNER AG) 04 May 2011 (2011-05-04) entire document | 1-22 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 February 2025** | **25 February 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 787 035 A1**

**INTERNATIONAL SEARCH REPORT**

International application No.

**PCT/CN2024/134373**

**C. DOCUMENTS CONSIDERED TO BE RELEVANT**

| Category* | Citation of document, with indication, where appropriate, of the relevant passages | Relevant to claim No. |
|---|---|---|
| A | CN 113093346 A (HUAWEI TECHNOLOGIES CO., LTD.) 09 July 2021 (2021-07-09) entire document | 1-22 |
| A | CN 219266580 U (COMMSCOPE TECHNOLOGIES LLC) 27 June 2023 (2023-06-27) entire document | 1-22 |

Form PCT/ISA/210 (second sheet) (July 2022)

## INTERNATIONAL SEARCH REPORT
### Information on patent family members

International application No.

**PCT/CN2024/134373**

| Patent document cited in search report | | | Publication date (day/month/year) | Patent family member(s) | | | Publication date (day/month/year) |
|---|---|---|---|---|---|---|---|
| US | 2009257722 | A1 | 15 October 2009 | US | 8403570 | B2 | 26 March 2013 |
| CN | 208432758 | U | 25 January 2019 | | None | | |
| US | 6572276 | B1 | 03 June 2003 | | None | | |
| CN | 114545561 | A | 27 May 2022 | | None | | |
| CN | 102047161 | A | 04 May 2011 | | None | | |
| CN | 113093346 | A | 09 July 2021 | | None | | |
| CN | 219266580 | U | 27 June 2023 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311603651